# EUROPEAN PATENT APPLICATION

(11) **EP 4 696 911 A1**
(43) Date of publication of application: **18.02.2026**
(21) Application number: 24194130.1
(22) Date of filing: 12.08.2024
(51) Int. Cl.: F16K 27/02, F16K 31/06

(54) **VALVE ASSEMBLY**

(71) Applicant: FAS MEDIC S.A., 1607 Palézieux (CH)
(72) Inventor: SIRDEY, Pierre, CH-1208 Geneva (CH)
(74) Representative: Edson, Russell Gregory

(57) **Abstract**

The invention provides a valve assembly comprising a fluid inlet (10) and a fluid outlet (20); an alignment tube having a bore, a valve seat (40) disposed in the bore of the alignment tube; a fluid pathway passing from the fluid inlet to the fluid outlet via the valve seat. The valve assembly also comprises a moveable plunger (60) having a first and a second end. The moveable plunger is disposed at least partially within the bore of the alignment tube, and has a sealing portion at its first end. The plunger is moveable between a first position and a second position to vary a flow restriction created by the valve seat and the sealing portion. The valve seat is supported by the bore of the alignment tube, and the plunger is supported by the alignment tube at a portion of the plunger distal from its first end, such that the alignment tube aligns the sealing portion of the plunger to the valve seat.

## Description

### FIELD OF THE INVENTION

The present invention relates to a valve assembly, and in particular to a valve assembly having an alignment tube.

### BACKGROUND TO THE INVENTION

Fluid control valves are used in a wide variety of applications to control the flow of a fluid. The fluid being controlled may comprise a gas, a liquid, or a combination thereof. In some situations, the fluid may also include suspended particulates. While fluid control valves vary widely in the specific configuration used to open and close a fluid communication path through the valve, one specific type of valve actuation is performed using a solenoid. In solenoid-actuated valves, an electric current passes through an electromagnetic coil, with the coil typically formed around a magnetic core. The coil generally comprises a wire that is wrapped around a plastic bobbin numerous times resulting in a plurality of so-called turns. The energized solenoid generates a magnetic field. The strength of the magnetic field is proportional to the number of turns as well as the electrical current provided to the wire. As is well-known in the art, in order to increase the magnetic field provided by a solenoid, the number of turns can be increased and/or the current provided to the wire can be increased. The magnetic field typically operates on a movable armature connected to a plunger which is configured to engage a valve seat, which surrounds an inlet and/or outlet through which fluid may pass, to vary a flow restriction created by the valve seat and a sealing portion of the plunger. Typically, the valve also includes a spring or other biasing member that generates a biasing force in opposition to the magnetic field. Therefore, in the absence of a magnetic field generated by the solenoid, the valve member is moved into a normally open or a normally closed position. In an open position, the plunger is in a position away from the valve seat, allowing fluid to pass through the inlet and/or outlet. In a closed position, the sealing portion of the plunger abuts the valve seat so as to close the inlet and/or outlet, preventing fluid from passing through the inlet and/or outlet.

In order to assemble known valves to the required arrangement within suitable tolerances, a high level of quality control is required. This process can be labour intensive and expensive.

There is therefore a need for improvements in valve assemblies.

### SUMMARY OF THE INVENTION

The inventors have identified that existing valves, which have various components to be assembled, can be present challenges regarding reliable assembly to the required degree of accuracy. The inventors have also identified that any misalignment between components of a valve assembly can be detrimental to the reliability, accuracy and predictability of the performance of a valve.

The inventors have developed an improved assembly which allows for an improved assembly process, and additionally improved alignment between the valve seat and plunger. This can be particularly advantageous in valves without a compliant material at the sealing interface, although improved alignment can be beneficial in other valves as well.

According to a first aspect of the invention, there is provided a valve assembly comprising a fluid inlet and a fluid outlet; an alignment tube having a bore, a valve seat disposed in the bore of the alignment tube; a fluid pathway passing from the fluid inlet to the fluid outlet via the valve seat; a moveable plunger having a first end and a second end, the plunger being disposed at least partially within the bore of the alignment tube, the plunger having a sealing portion at its first end, and being moveable between a first position and a second position to vary a flow restriction created by the valve seat and the sealing portion; wherein the valve seat is supported by the bore of the alignment tube and the plunger is supported by the bore of the alignment tube at a portion of the plunger distal from its first end, such that the alignment tube aligns the sealing portion of the plunger to the valve seat.

This valve assembly has the advantage of providing a configuration in which the plunger and the valve seat can be reliably assembled, and even reliably aligned. This valve assembly also has the advantage of being simple and not having many constituent parts, resulting in easier manufacture and assembly. This valve assembly has the advantage of allowing for reliable and adjustable relative dimensions and alignment within the sealing area (i.e. the plunger relative to the valve seat) of the valve assembly.

The plunger may be supported by the bore of the alignment tube at a portion of the plunger spaced apart from its first end. The plunger may be supported by the guide portion of the alignment tube at a portion of the plunger distal from, or spaced apart from its first end. The plunger may comprise a root portion and a head portion. The root portion may be disposed in the guide portion of the alignment tube. The head portion of the plunger may be disposed in the chamber portion of the alignment tube. The root portion may have a lateral dimension, which may be a diameter. The head portion may have a lateral dimension, which may be a diameter. The lateral dimension or diameter of the head portion may be larger than the lateral dimension or diameter of the root portion. The plunger may be supported by the guide portion of the alignment tube at its root portion. The plunger may not be supported by the alignment tube at its head portion.

The alignment tube may have a guide portion for receiving and guiding the plunger. The alignment tube may have a chamber portion for receiving the valve seat. A majority of the plunger length in a longitudinal direction may be received in the guide portion.

The guide portion may have a bore diameter substantially the same as a diameter of at least part of the plunger received in the guide portion.

The alignment tube may be a thin-walled tube. The alignment tube may have a guide portion wall thickness and/or a chamber portion wall thickness of less than a quarter of the bore of the alignment tube; preferably less than a third; preferably less than a tenth of the bore of the alignment tube.

The plunger may be supported by the bore of the alignment tube at least at its second end. This has the advantage of making efficient use of space within the valve.

The alignment tube may comprise a metal and/or an alloy. This had advantages in terms of ease of manufacture, improved dimensional accuracy of the alignment tube, and improved mechanical properties compared to polymeric valve components.

The alignment tube may have a microstructure indicative of having been deep-drawn. This results from manufacture of the alignment tube. Methods of detection of a microstructure indicative of having been deep-drawn are known to a person skilled in the art of materials engineering. The term "deep-drawn" is a known manufacturing method involving drawing a blank of material into a forming die.

The chamber portion may be tubular and configured to receive the valve seat so as to allow assembly of the valve seat and the alignment tube by linear translation of the valve seat relative to, and preferably into the alignment tube. This has the advantage of easy assembly of the components of the valve assembly. The tubular configuration may be substantially symmetrical. This has the advantage of providing a valve assembly which is easy to manufacture and assemble. The guide portion may be tubular. The guide portion may be configured to slidably engage at least a part of the plunger. This has the advantage of being simple and not having many constituent parts, resulting in easier manufacture and assembly.

The valve assembly may be configured such that the fluid pathway passes between the plunger first end and the plunger second end.

The chamber and/or guide portions of the alignment tube may be substantially cylindrical. This has the advantage of providing a valve assembly which is easy to manufacture and assemble.

The alignment tube may comprise a bridging portion. The bridging portion may be disposed between the chamber portion and the guide portion of the alignment tube. The chamber portion may have an inner lateral dimension which is not equal to an inner lateral dimension of the guide portion. The chamber portion may have an outer lateral dimension which is not equal to an outer lateral dimension of the guide portion. The inner lateral dimension of the chamber portion may be larger than the inner lateral dimension of the guide portion of the alignment tube and/or the outer lateral dimension of the chamber portion is larger than the outer lateral dimension of the guide portion of the alignment tube. The bridging portion may provide a transition region between the chamber portion and the guide portion. This has the advantage of providing a compact valve assembly, where space is efficiently used.

The plunger may extend at least partially from the guide portion into the chamber portion of the alignment tube.

A cavity may be provided within the alignment tube, defined at least partly by the valve seat and part of the chamber portion of the alignment tube, and part of the plunger may extend from the guide portion, and/or the biasing means may be disposed in the cavity. A head portion of the plunger may extend from the guide portion.

The chamber portion of the alignment tube may extend radially outwardly at its end, so as to facilitate assembly of the valve seat into the alignment tube.

The valve assembly may comprise a biasing means. The biasing means may be located between the plunger and the bridging portion of the alignment tube. The biasing means may be located in the chamber portion of the alignment tube. The biasing means may be located between a head portion of the plunger and the bridging portion of the alignment tube. The biasing means may be configured to bias the plunger. The biasing means may be configured to bias the plunger away from the guide portion and/or away from the bridging portion. This has the advantage of providing a valve assembly in which a default position of the plunger can be configured. This has the advantage of providing a valve assembly in which the flow restriction created by the valve seat and the sealing portion can be reliably controlled. This may also have the advantage of providing a valve assembly in which movement of the plunger in at least one direction is autonomously controlled by the biasing means. A cavity may be defined in the chamber portion of the alignment tube, and the biasing member may be disposed in the cavity. Biasing against the bridging portion can provide an efficiently configured valve assembly.

The sealing portion may be configured to be at least partly received in the valve seat, and as such may be curved, rounded, tapered, conical, and/or spherical. The sealing portion may comprise a substantially spherical or part-spherical component, configured to seal the valve seat when the plunger is in the first position. Such a spherical or part spherical component may comprise a ball. Such components have the advantages of ease of manufacture and providing a reliable seal between the valve seat and the plunger. One such spherical component can be a ball as used in a ball bearing. The sealing portion may comprise a tapered portion. The sealing portion may be a single unitary piece of material with the plunger body. This has the advantage of providing a simple and robust component, in which the sealing portion is not easily detached from the plunger body. Alternatively, the sealing portion may be a separate piece to a body of the plunger, the sealing portion being attached to the plunger. This has the advantage of providing a sealing portion and plunger which can easily be made from different materials. The sealing portion may be an integral part of the plunger.

The sealing portion and/or the valve seat may comprise a solid, non-elastomeric, material. The sealing portion may comprise a hard material with a higher Vickers hardness than the valve seat. The sealing portion and/or the valve seat may comprise or consist of at least one of: a ceramic; silicon carbide; boron carbide; cubic boron nitride; tungsten carbide; diamond; ruby; sapphire, a martensitic material.

The sealing portion and/or the valve seat may comprise an elastomeric material.

The plunger may have a first end and a second end and the valve assembly may be configured such that the fluid pathway passes between the plunger first end and the plunger second end.

The chamber portion of the alignment tube may extend radially outwardly at its end, so as to facilitate assembly of the valve seat into the alignment tube.

The alignment tube may comprise a laterally disposed aperture, and the valve assembly is configured such that the fluid pathway passes through the laterally disposed aperture. The valve assembly may comprise a fixed magnetic core located at the plunger second end. The fixed core may be configured to be received in the second end of the alignment tube.

The valve seat may be located towards the first end of the alignment tube. The plunger may be located towards the second end of the alignment tube, and may be moveable towards the first end of the alignment tube to close the fluid pathway at the valve seat. This has the advantage of providing a compact valve assembly.

The valve assembly may comprise a supporting component configured to support the valve seat, the supporting component being at least partially received within the bore of the alignment tube. The supporting component may be a separate piece to the valve seat, and may be fixedly attached to the valve seat.

The plunger may have at least one outer groove to accommodate the fluid pathway, such that part of the fluid pathway is between the alignment tube and the plunger. This has the advantage of providing a simple, compact, valve assembly.

A guide feature may be provided on the plunger at the plunger first end, and/or on the valve seat, the guide feature being configured to align the sealing portion of the plunger to the valve seat.

There may be provided a valve assembly having a damping system. The valve assembly may comprise a damping system configured to dampen movement of the plunger as the plunger moves from the first position to the second position, the damping system comprising at least one spring element disposed at the first end of the plunger.

The plunger itself may comprise the damping system. The damping system may comprise one or more spring elements. The one or more spring elements may be configured to dampen movement of the plunger relative to the valve seat. Advantageously, one or more spring elements may be configured to dampen movement of the plunger relative to the sealing portion of the plunger. The one or more spring elements may be a component configured to elastically deform, such as a spring. The one or more spring elements may be a flat spring, disc spring, coil spring or may take any other suitable shape. Where more than one spring element is provided, all spring elements may be of the same type, e.g. a flat spring. There may be provided a first and a second flat spring, which may be the same as each other in terms of shape, size, material composition, or manufacture.

The valve assembly may comprise a connection means configured to clip onto a component of the valve assembly, the connection means comprising one or more electrically conductive components. The one or more electrically conductive components may be configured to provide an electrically conductive pathway to a solenoid coil.

The sealing portion may be disposed on, or supported by, the or each spring element. The sealing portion may be sprung by virtue of the spring element. The or each spring element may be configured to elastically deform when a load is applied to the sealing portion, which may be an axial load. Specifically, the spring element may be configured to elastically deform after the sealing portion contacts the valve seat. In practice, as the plunger and its sealing portion moves towards the valve seat, the spring element is in a resting state, i.e. not elastically deformed or stressed state. The spring element may be configured such that once the sealing portion contacts the valve seat, continued movement of the plunger towards the valve seat elastically deforms the spring element. The spring element and/or sealing portion may be configured such that a damping effect results from slippage of the spring element against the sealing portion, which may result from frictional contact between the spring element and the sealing portion as the spring element bends. As such, the or each spring element may act as a damping system, which can prevent shocks in the valve assembly and/or wear of components in the valve assembly. Equally, the spring element may accommodate any misalignment between the sealing element and the valve seat. The damping effect may result from slippage between a spring element and the sealing portion and/or between a spring element and a portion of the plunger.

The sealing portion may be disposed between a plurality of spring elements, in which the sealing portion is disposed between a first and a second flat spring. This arrangement has the advantage of ease of assembly, improved alignment of the sealing portion, and an improved damping effect due to a larger contact area between the flat springs and the sealing element.

The one or more spring elements may be configured such that movement of the plunger creates slippage between a contact surface of the or each spring element and a contact surface of the plunger or sealing portion. Advantageously, the or each spring element is arranged such that the contact surface of the sealing portion or plunger to the one or more spring elements is at a non-zero angle with respect to the longitudinal axis of the plunger. i.e. the contact surface between the one or more spring elements and the plunger or sealing portion is not parallel to the longitudinal axis of the plunger. This has the advantage of improving slippage between the or each spring element and the plunger or sealing portion. Where more than one spring element is provided, at least one spring element may be spaced apart from at least one other spring element. One or more spring elements may be spaced apart, with the sealing portion disposed therebetween. As noted above, the sealing portion may be at least partly curved, rounded, tapered, conical, and/or spherical, such that a contact surface between the sealing portion and a spring element may be at least partly spherical or conical.

An advantage of a combination of the damping system, specifically the one or more spring elements, and a hard sealing portion and/or hard valve seat is that a high precision valve assembly can be provided. This is particularly advantageous in miniature or low fluid volume applications, or applications in which a high degree of accuracy of the valve is required. A hard sealing portion and/or valve seat can be manufactured to a high degree of accuracy, and can have reliable and predictable properties over time by virtue of their material composition, which has a low risk of being altered by continued use of the valve. When a hard material sealing portion and/or valve seat is used in combination with a damping system, which can accommodate shock and prevent wear, a valve assembly having particularly improved accuracy in use is achieved.

The valve assembly, any sub-assembly of the valve assembly, or any component part may comprise any of, or any combination of, the features of any aspect or example described herein. Features such as the plunger shape, sealing portion shape or material, number of components comprised in the valve seat, valve seat shape or material, housing shape or material, relative dimensions or positions of component parts of the assembly, among others, are interchangeable between different aspects or examples. For example, a damping system may be used with the first or second aspects of the invention, any variation of these aspects, or any other aspect or example. Any variation of the damping system, such as whether a spring is used, number, shape, configuration, or position of springs, may equally be used with the first or second aspects of the invention, any variation of these aspects, or any other aspect or example.

According to a second aspect of the invention, there is provided a method of assembling a valve assembly, comprising
providing an alignment tube having a bore; a valve seat; and a plunger having a first end and a second end, and having a sealing portion at its first end;
inserting the plunger at least partially within the bore of the alignment tube;
inserting the valve seat into the bore of the alignment tube;
such that the valve seat is supported by the bore of the alignment tube, and the plunger is supported by the bore of the alignment tube at a portion of the plunger distal from its first end, so that the alignment tube aligns the sealing portion of the plunger to the valve seat.

The method may be configured for assembling the valve assembly according to any example described herein.

### BRIEF DESCRIPTION OF THE DRAWINGS

Examples of the present invention will now be described, by non-limiting example only, with reference to the accompanying drawings, in which:
Figure 1 shows a cross-sectional view through a first example of a valve assembly;
Figure 2 shows an exploded view of the valve assembly of Figures 1;
Figure 3 shows a cross-sectional view through a second example of a valve assembly;
Figure 4 shows an enlarged cross-sectional view through a third example of a valve assembly;
Figure 5 shows an isometric view of the plunger and guide of the third example;
Figure 6 shows a cross-sectional view through the plunger and guide of the third example; and
Figure 7 shows a cross-sectional view through a fourth example of a plunger and seat of a valve assembly.

### DESCRIPTION OF ASPECTS OF THE INVENTION

The following detailed description and figures provide examples of how the present invention can be implemented. These should not be seen as limiting examples, rather illustrations of how the various features of the valves disclosed herein can be combined. Other optional combinations will be evident upon a reading of the following description in light of the figures.

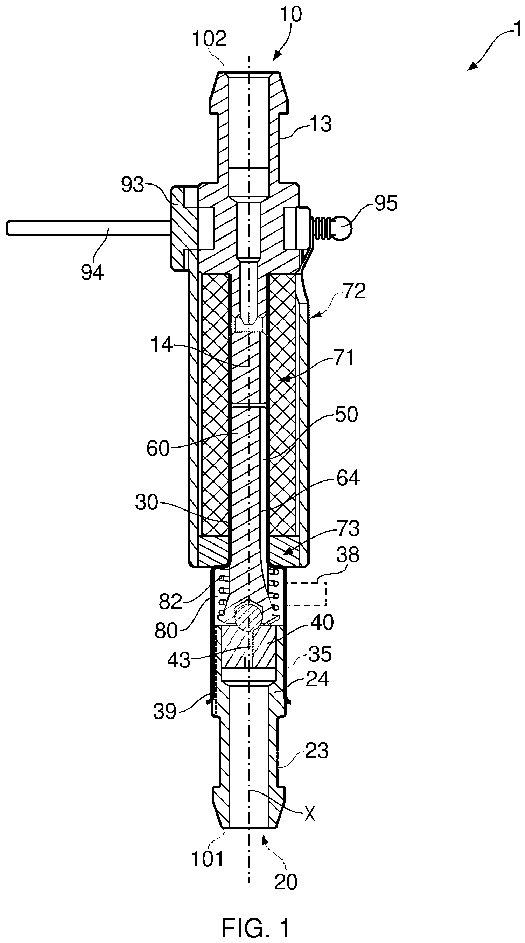

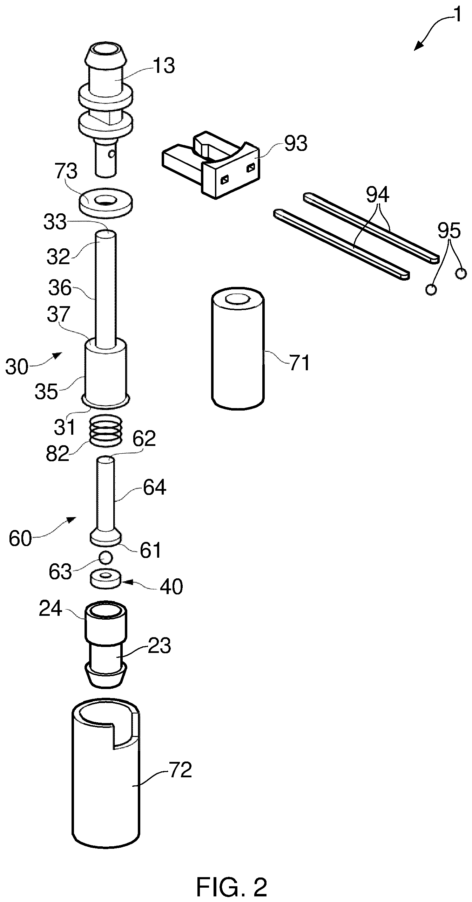

Figures 1 and 2 show a valve assembly 1. As best seen in figure 1, the valve assembly 1 comprises a fluid inlet 10, a fluid outlet 20, an alignment tube 30, a valve seat 40, a fluid pathway 50, and a moveable plunger 60.

The fluid inlet 10 and the fluid outlet 20 are configured such that fluid can be received into the fluid inlet 10 and fluid can be released from the fluid outlet 20, or vice versa. The valve assembly 1 may have a first end 101 and a second end 102. The valve assembly may define an axis X, and the first and second ends 101, 102 may be intersected by the axis X. As shown in figure 1, the fluid inlet 10 may be arranged at a second end 102 of the valve assembly 1 and the fluid outlet 20 may be arranged at a first end 101 of the valve assembly 1. As shown in figure 1, the first end 101 may be at an opposite end of the valve assembly 1 to the second end 102. As a skilled person will appreciate, there is no requirement for the fluid inlet 10 and the fluid outlet 20 to be arranged at opposite ends of the valve assembly. For example, the fluid inlet 10 and the fluid outlet 20 may both be arranged at the first end 101 of the valve assembly 1. The fluid inlet 10 and the fluid outlet 20 may both be arranged to one side, i.e. below, the plunger 60 of the valve assembly 1. As a skilled person will appreciate, the fluid inlet 10 and the fluid outlet 20 may be interchangeable, such that the fluid inlet 10 operates as a fluid outlet 20 and the fluid outlet 20 operates as a fluid inlet 10. There may be provided a side aperture 38 in a side of the alignment tube 30. An example of such a side aperture is schematically represented in dashed lines as feature 38 in figure 1. The side aperture may comprise a wall extending from the alignment tube 30, as shown in figure 1, or may be provided as a hole in the alignment tube 30. Such a side aperture 38 may be provided between the valve seat 40 and a bridging portion 37 of the alignment tube 30. The side aperture 38 may configured to allow the fluid pathway 50 to pass through the side aperture 38. The side aperture 38 may be suitable for use as an inlet or outlet.

Alternatively, there may be provided a base aperture at an end of the alignment tube 30. The base aperture may be provided between the alignment tube 30 and the valve seat 40, specifically between the alignment tube 30 and the supporting component 24. There may alternatively be provided a base aperture 39 in the valve seat 40 or supporting component 24, as shown by the dotted line 39 in figure 1.

The side aperture 38 and base aperture 39 may be provided as alternatives to the inlet 10. The side aperture 38 and base aperture 39 may configured to operate as either an inlet or an outlet. In valve assemblies having either a side aperture 38 or a base aperture 39 instead of an inlet 10, the fluid pathway is relatively short, which has the advantage of minimising energy losses of a fluid passing through the fluid pathway 50.

The valve assembly 1 may comprise an inlet component 13 and an outlet component 23. The inlet component 13 may define the inlet 10 and the outlet component 23 may define the outlet 20. The inlet component 13 may comprise a fixed magnetic core 14. The fixed magnetic core 14 may be configured to be received in a second end 32 (see Figure 2) of the alignment tube 30. The fixed core 14 may be a magnetic core of a solenoid actuator of the valve assembly. The fixed core 14 may comprise a magnetisable material. The valve assembly may comprise a supporting component 24. The supporting component 24 may be configured to support the valve seat 40. The supporting component 24 may be configured to receive at least part of the valve seat 40. The supporting component 24 may be at least partially received within the bore 33 of the alignment tube 30. The outlet component 23 may comprise the supporting component 24.

The fluid pathway 50 is configured to pass from the fluid inlet 10 to the fluid outlet 20 via the valve seat. The fluid pathway 50 may be in an open state, a closed state, or a restricted state. In an open state, the fluid pathway 50 defines a passageway through which fluid can pass. In a closed or restricted state, the fluid pathway 50 respectively prevents or restricts fluid from passing through the fluid pathway 50. Specifically, in a closed state, the fluid pathway 50 prevents fluid from passing from the inlet 10 to the outlet 20 or vice versa. In a restricted state, the fluid pathway 50 restricts fluid from passing from the inlet 10 to the outlet 20 or vice versa. The restriction of the fluid pathway 50 may be caused by a proximity of a sealing portion 63 of the plunger 60 to the valve seat 40. Closing of the fluid pathway 50 may be caused by contact between the sealing portion 63 of the plunger 60 and the valve seat 40.

As best seen in figures 1 and 2, the alignment tube 30 is configured to at least partially receive the valve seat 40, and to at least partially receive the plunger 60. The alignment tube 30 has a bore 33. The bore 33 is configured to support the valve seat 40 and the plunger 60, such that the alignment tube 30 aligns the sealing portion of the plunger 60 to the valve seat 40.

The alignment tube 30 may have a first end 31 and a second end 32. The alignment tube 30 may be configured to receive the plunger 60 such that the plunger 60 is proximate the second end 32 of the alignment tube 30. The alignment tube 30 may be configured to receive the valve seat 40 such that the valve seat is proximate the second end 32 of the alignment tube 30. Specifically, the bore 33 may be configured to at least partially receive the valve seat 40, and to at least partially receive the plunger 60. The bore 33 may be configured to completely receive the plunger 60. The bore 33 may pass from the first end 31 to the second end 32 of the alignment tube 30. The bore 33 may be an open bore or may comprise closed portions. For example, the bore 33 may provide a first closed sub-bore at the first end 31 and a second closed sub-bore at a second end 32 of the alignment tube 30. The bore 33 may be substantially cylindrical. The bore 33 may have a constant diameter, or may have sections which have different diameters to each other.

The alignment tube 30 may have a chamber portion 35 and a guide portion 36. The chamber portion 35 and/or the guide portion 36 may be tubular. The chamber portion 35 may be configured to receive the valve seat 40 so as to allow assembly of the valve seat 40 and the alignment tube 30 by linear translation. This translation may be an axial translation of the valve seat into the alignment tube along a longitudinal axis of the alignment tube. The guide portion 36 may be configured to slidably engage at least part of the plunger 60. The chamber and/or guide portions 35, 36 of the alignment tube 30 may be substantially cylindrical.

The alignment tube 30 may have a bridging portion 37. The bridging portion 37 may be disposed between the chamber portion 35 and the guide portion 36 of the alignment tube 30. The bridging portion 37 may be connected to the chamber portion 35 and the guide portion 36 such that the chamber and guide portions 35, 36 are fixedly attached to each other by means of the bridging portion 37. The bridging portion 37 may be substantially annular; may extend radially outwardly from the guide portion 36; may extend radially between the chamber portion 35 and the guide portion 36, or between their respective circumferences; may be substantially disc-shaped, and/or may be substantially washer-shaped.

The chamber portion 35 may have a lateral dimension which is not equal to a lateral dimension of the guide portion 36. The bridging portion 37 may provide a transition region between the chamber portion 35 and the guide portion 36. The lateral dimension of the chamber portion 35 may be larger than the lateral dimension of the guide portion 36 of the alignment tube 30. The chamber portion 35, guide portion 36 and/or the bridging portion 37 may have substantially the same thickness. The alignment tube 30 may be a single unitary piece of material such as a metal or alloy. Advantageously, the chamber portion 35, bridging portion 37 and guide portion 36 of the alignment tube are all integrally formed as a single component.

The valve seat 40 is configured to be disposed in the bore 33 of the alignment tube 30. The valve seat 40 is configured such that fluid can pass from the fluid inlet 10 to the fluid outlet 20 via the valve seat 40. Specifically, the fluid pathway 50 may pass through the valve seat 40. The fluid pathway 50 may pass through a centre of the valve seat 40. The valve seat 40 may comprise an aperture 43 through which the fluid pathway 50 may pass. The aperture 43, may be one or more of: substantially straight, substantially elongate, arranged centrally, and arranged such that the valve seat is substantially symmetrical. The valve seat may comprise a solid, non-elastomeric, material. The valve seat 40 may comprise a hard material. The valve seat 40 may comprise one or more of: a ceramic; silicon carbide; boron carbide; cubic boron nitride; tungsten carbide; diamond; ruby; sapphire, a martensitic material. The valve seat 40 may comprise an elastomeric material. The valve seat 40 may be configured to be sealed when the plunger 60 is in the first position. Specifically, the valve seat 40 may be configured such that the fluid pathway 50 through the valve seat 40 is sealed by the plunger 60 when the plunger 60 is in the first position. The valve seat 40 may be located towards the first end of the alignment tube 30.

The moveable plunger 60 is configured to be disposed at least partially within the bore 33 of the alignment tube 30. The plunger 60 has a sealing portion 63. The plunger 60 may have a first end 61 and a second end 62. The sealing portion 63 may be disposed at the plunger first end 61. The sealing portion 63 may comprise a ball, as best seen in Figure 2. The ball may be configured to seal the valve seat 40, i.e. close the fluid pathway 50, when the plunger 60 is in a first position. The plunger 60 may comprise a lip. The lip may be arranged at the plunger first end 61. The plunger 60 may define an aperture 64. The aperture 64 may be configured to define at least part of the fluid pathway 50. The aperture 64 may be configured to run from the second end 62 of the plunger 60 towards the first end 61 of the plunger 60. The aperture 64 may be substantially elongate. The aperture 64 may be substantially groove-shaped.

In the valve assembly 1, the plunger 60 may be configured to be moveable between a first position and a second position to vary a flow restriction created by the valve seat 40 and the sealing portion 63. The plunger 60 may be located towards the second end 32 of the alignment tube 30, and may be moveable towards the first end 31 of the alignment tube 30 to close the fluid pathway 50 at the valve seat 40.

The valve assembly 1 may further comprise a housing. The housing may comprise a first housing part 71, a second housing part 72, and a third housing part 73. The first housing part 71 may be an inner housing part. The first housing part 71 may be an actuation means, which may be suitable for actuating the plunger 60 from a first position to a second position. The first housing part 71 may be magnetisable. The first housing part 71 may be a component of a solenoid. The first housing part 71 may be a coil, which is configured to induce a magnetic field when a current is passed through the coil. The coil may be helical. The second housing part 72 may be an outer housing part. The third housing part 73 may be an inner housing part. The first 71 or third 73 housing parts may form a magnetic circuit of a solenoid for actuating the valve. At least a portion of the inlet component 13 may form a part of a magnetic circuit of a solenoid for actuating the valve. The first housing part 71 and the third housing part 73 may be disposed inside the outer second housing part 72. The first and third housing parts 71, 73 may define an aperture, the aperture being configured to receive at least part of the plunger 60 and at least part of the alignment tube 30. The second housing part 72 may be configured so as to provide a casing for the valve. The second housing part 72 may be configured to protect at least part of the valve assembly 1. The third housing part 73 may be configured as a support, upon which the first housing part 71 can be supported. The third housing part may be configured to provide a surface against which the bridging portion 37 of the alignment tube 30 can be aligned.

The valve assembly 1 may further comprise a biasing means 82. The alignment tube 30 may define a cavity 80, the cavity 80 being configured to receive the biasing means 82. Specifically, the chamber portion 35 of the alignment tube 30 may define the cavity 80. The biasing means 82 may be a spring, in particular a helical spring. The biasing means 82 may comprise a metal or alloy. The biasing means 82 may be configured so as to bias the plunger 60 into the first position or second position. The biasing means 82 may be located between the plunger 60 and the bridging portion 37 of the alignment tube 30. The biasing means 82 may be configured to contact the lip of the plunger 60. The biasing means 82 may be configured to bias the lip of the plunger 60 away from the bridging portion 37 of the alignment tube 30.

The valve assembly 1 may comprise a connection means. The connection means may be configured to attach the valve assembly 1 to another component, such as a solenoid coil.

The connection means may comprise a connection body 93. The connection body 93 may comprise a plurality of hooks, such as the two hooks shown in figure 2. The connection body 93 may be configured to clip onto the inlet component 13, optionally by means of the plurality of hooks.

The connection means may comprise one or more pins 94. The one or more pins 94 may be electrically conductive. The one or more pins 94 may be electric pins 94. The one or more pins 94 may be configured to provide an electrically conductive pathway to a solenoid coil. The one or more pins 94 may be fixedly attached to the connection body 93, optionally by way of over-moulding the connection body 93 onto the pins 94.

The connection means may comprise one or more brazing features 95. The one or more brazing features 95 may comprise or consist of a brazing material. The one or more brazing features may be configured to attach the pins 94 to a solenoid coil.

The connection body 93, pins 94 and brazing features 95 may attach to one another, and may be configured to attach the valve assembly 1, specifically the second end 102 of the valve assembly to a separate component, such as a solenoid coil. As a person skilled in the art will appreciate, any suitable attachment means may be used.

In use, the valve assembly is configured such that the plunger 60 can be moved from a first position, in which the fluid pathway 50 is closed, to an open position in which the fluid pathway 50 is open. In the first position, the plunger 60 may be maintained in place by the biasing means 82. Upon actuation of an actuation means, the plunger 60 may be caused to move, which may involve movement along axis X, to a second position, against the biasing force provided by the biasing means 82. Actuation may be achieved by applying a potential difference to a solenoid coil, which may apply a magnetic biasing force to the plunger 60. Movement of the plunger 60 is controlled by the alignment tube 30, which ensures that the relative position of the plunger 60 and the valve seat 40 are controlled in use.

A particularly advantageous feature of the present invention is that when the plunger 60 is moved from a second position (i.e. fluid pathway is open) to a first position (i.e. plunger 60 contacts the valve seat 40 and the fluid pathway 50 is closed), the position of the plunger is controlled. Specifically, the plunger 60 may move along axis X, but movement of the plunger 60 in a lateral direction, i.e. away from axis X, is restricted by the alignment tube 30.

The position of the valve seat 40 is also controlled by the alignment tube 30. The valve seat 40, which may be fixed in position in use relative to a majority of components of the valve assembly 1, is prevented from moving out of place laterally. The valve seat 40 may be caused to remain aligned along the axis X of the valve assembly 1 by means of the alignment tube 30, which may fix the valve seat 40 in alignment with the plunger 60.

The valve 1 may be assembled by:
providing an alignment tube 30 having a bore 33; a valve seat 40; and a plunger 60 having a sealing portion 63;
inserting the plunger 60 at least partially within the bore 33 of the alignment tube 30;
inserting the valve seat 40 into the bore 33 of the alignment tube 30;
such that the valve seat 40 and the plunger 60 are both supported by the bore 33 of the alignment tube 30, the alignment tube 30 aligning the sealing portion 63 of the plunger 60 to the valve seat 40.

The method of assembly of the valve 1 may include one or more of the following steps:
- Inserting the alignment tube 30 into the third housing part 73. This may be carried out until the third housing part 73 reaches the bridging portion 37.
- Inserting the inlet component 13 into the alignment tube 30.
- Attaching the inlet component 13 to the alignment tube 30. This may be carried out by laser welding, and may be carried out until a water-proof connection is provided between the inlet component 13 and the alignment tube 30.
- Attaching one or more pins 94 to a connection body 93. This may be carried out by over-moulding the connection body 93 onto one or more pins 94.
- Attaching the connection body 93 to the inlet component. This may involve clipping the connection body 93 to the inlet component 13.
- Attaching the first housing part 71 to the alignment tube 30; inlet component 13; connection body 93; and third housing part 73. This may involve winding the first housing part 71 around the alignment tube 30. Specifically, this may involve winding the first housing part around the guide portion 36 of the alignment tube 30.
- Applying compression to a sub-assembly comprising: the alignment tube 30; the inlet component 13; the connection body 93; the third housing part 73; and the first housing part 71.
- Pressing the sealing portion 63 into the first end 61 of the plunger 60.
- Inserting the plunger 60 into the biasing means 82. This may be carried out until the biasing means contacts the first end 61 of the plunger 60.
- Inserting a sub-assembly comprising the plunger 60, the sealing portion 63, and the biasing means 82, into the alignment tube 30. This may be into the chamber portion 35 of the alignment tube 30, and then into the guide portion 36 of the alignment tube 30.
- Pressing the valve seat 40 into the supporting component 24.
- Pressing the valve seat 40 and the supporting component 24 into the alignment tube 30. This may be into the chamber portion 35 of the alignment tube 30. This may be carried out to a pre-determined position or dimension.

Some or all of the steps above may be carried out in the order in which they are listed.

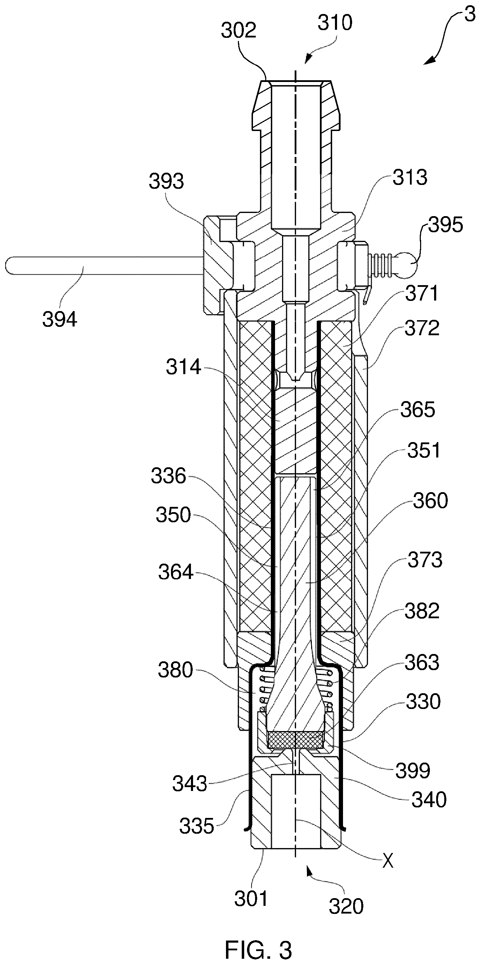

Figure 3 shows a second example of a valve assembly 3.

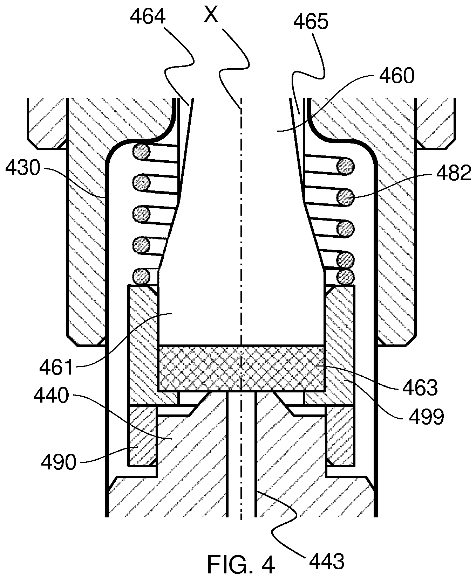

As a skilled person will appreciate, several features of the second and third examples described in the following are the same as or similar to the first example described above. Where a feature of the second or third example corresponds to the first example, a corresponding reference number is used, preceded with the number "3" or "4". Unless otherwise stated, each feature of the second or third examples, shown in figures 3 and 4, is the same as a corresponding component in the first example, shown in figures 1 and 2. The skilled reader will appreciate that in view of the similarity of the examples, any or all compatible features of one example may be combined with the other. As such, elements of the description of the examples described above may be combined with the examples described in the following.

The second example differs from the first example in at least the following ways.

The second example of the valve 3 has a plunger 360 comprising a sealing portion 363, which functions in substantially the same way as the sealing portion 63 of the first example 1, in that it may be configured to seal the valve seat 340, i.e. close the fluid pathway 350, 531, when the plunger 360 is in a first position. As shown in figure 3, the sealing portion 363 may be substantially planar. The sealing portion 363 may have a substantially square or rectangular cross-section. The sealing portion 363 may comprise or consist of a polymer. Specifically, the sealing portion 363 may comprise or consist of an elastomer. As a skilled person will appreciate, the sealing portion 363 described and shown in relation to the second example valve 3 may be used with the first example valve 1, and the sealing portion 63 described and shown in relation to the first example valve 1 may be used with the second example valve 3.

The sealing portion 363 may be attached to the plunger 360 by a sealing portion holder 399. The sealing portion holder 399 may be pressed around the plunger 360, and may exert a compressive force on the plunger 360 and/or sealing portion 363. The sealing portion holder 399 may be a clip. Alternatively or in addition, the sealing portion 363 may be over-molded or clipped onto the plunger 360. A sealing portion holder 399 may equally be provided with the first example valve 1.

The second example of the valve 3 comprises a valve seat 340, which functions in substantially the same way as the valve seat 40 of the first example 1, and is configured to be disposed in the bore of the alignment tube 330. In contrast to the valve seat 40 of the first example 1, the valve seat 340 of the second example 3 may be configured to be disposed in the bore of the alignment tube 330 such that it is directly supported by the alignment tube 330. The valve seat 340 may be in contact with the alignment tube 330, specifically an inner surface that defines the bore of the alignment tube 330. This is in contrast to use of the valve seat 40 together with the supporting component 24 in the first example 1. The valve seat 340 may comprise the same material or materials as the first example valve seat 40, or may in addition or alternatively comprise a polymer, such as polyether ether ketone (PEEK). The valve seat 340 may have been machined or injection molded, such as PEEK-injection molded. As such, the valve seat 340, may be visually identifiable as having been injection molded or machined, or may have mechanical properties indicative of it having been injection molded or machined. As a skilled person will appreciate, the valve seat 340 described and shown in relation to the second example valve 3 may be used with the first example valve 1, and the valve seat 40 and supporting component 24 described and shown in relation to the first example valve 1 may be used with the second example valve 3.

The plunger 360 of the second example valve 3 may define a plurality of apertures 364, 365. The apertures 364, 365 may each be configured to define at least part of the fluid pathway 350, 351. Alternatively, the plunger 360 may define a single aperture 364, as shown in figure 1 of the first example valve 1. The plunger 60 of the first example valve 1 may equally define a plurality of apertures 364, 365.

The third housing part 373 may be the same as the third housing part 73 of the first example in that may be configured to provide a surface against which the bridging portion of the alignment tube 330 can be aligned. The third housing part 373 may be configured to receive at least part of the chamber portion 335 and the guide portion 336 of the alignment tube 330. The third housing part 373 may be configured to extend along the chamber portion 335 of the alignment tube 330. The third housing part 373 described and shown in relation to the second example valve 3 may be used with the first example valve 1, and the third housing part 73 described and shown in relation to the first example valve 1 may be used with the second example valve 3.

With reference to figures 4 to 6, there may be provided a guide feature 490 on the plunger 460 at the plunger first end 461, and/or on valve seat 440 or its supporting component 24. The guide feature 490 may be configured to align the sealing portion 463 of the plunger to the valve seat 440 and/or its supporting component 24. The guide feature may be configured to guide the plunger 460 with respect to the valve seat 440 by sliding engagement with a feature of the valve seat 440, such as an axially extending surface of the valve seat 440. The guide feature 490 may work in parallel with the guide portion 36 of the alignment tube 430 to align the sealing portion 463 of the plunger 460 to the valve seat 440 and/or its supporting component 24. The guide feature 490 may be configured to guide the plunger first end 461 onto the valve seat 440, for example when the plunger 460 moves from its second position (i.e. fluid pathway 50 is open and may be in fluid communication with aperture 443 in the valve seat 440) to its first position (i.e. plunger 460 contacts the valve seat 440 and the fluid pathway 50 is closed). The guide feature 490 may be a separate component to the plunger 460, valve seat 440 and supporting component 24, or may be integrally formed with the plunger 460, valve seat 440 or supporting component 24. The guide feature 490 may be substantially circular, and/or may be cylindrical or ring-shaped. The guide feature 490 may be integral with the sealing portion 463 or the sealing portion holder 499.

The plunger 460 of the third example may define a plurality of apertures 464, 465. The apertures 464, 465 may each be configured to define at least part of the fluid pathway. Alternatively, the plunger 460 may define a single aperture 464, as shown in figure 1 of the first example valve 1. The plunger 60 of the first example valve 1 may equally define a plurality of apertures 464, 465.

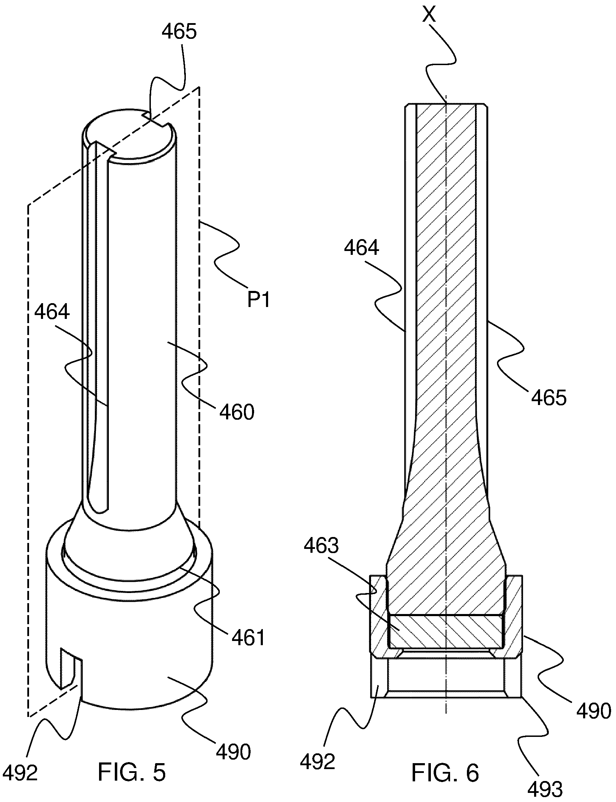

The guide 490 and plunger 460 are shown in more detail in Figures 5 and 6. Figure 6 is a cross-sectional view of the isometric view of Figure 5, the cross-sectional view is along plane P1 and viewed substantially perpendicular to plane P1. Other features of the valve, such as the valve seat 440, have been removed for reasons of clarity from both Figures 5 and 6 as will be apparent to the skilled reader, but can be included as shown and described in relation to the other figures.

As can be seen in Figure 5 and 6 the guide 490 may have at least one channel 492, 493. The channel 462, 493 may form a part of the fluid pathway 50. In the example depicted in Figures 5 and 6 the guide has a plurality, such as two, channels 492, 493 disposed circumferentially apart from each other on the guide 490. In alternative configurations there may be only a single channel (492 or 493) or three or four channels, or another number of plural channels.

The channels 492, 493 may be sized such that they have a channel width substantially the same as the apertures 464, 465.

Whilst the channels 492, 493 are shown in the depicted example of Figure 5 and 6 as being slots, the channels 492, 493 may take the form of any aperture, bore, scallop, or hole which enables fluid to be communicated through or around a wall of the guide 490.

As can be seen in Figure 5 and 6 the apertures 464, 465 line up with the channel 492 and 493 however the guide 490 (and therefore channels 492, 493) may be in any orientation relative to the plunger's apertures 464, 465. For example, the channel 492 may be disposed at an angle of 45-135 degrees or 90 degrees relative to the aperture 464 and likewise the channel 493 may be disposed at an angle of 45-135 degrees or 90 degrees relative to the aperture 465.

As will be apparent to the skilled reader when reviewing Figures 4-6 and the associated description, when the plunger 460 is not contacting the valve seat 440 (valve open) the fluid pathway 50 is operatively connected to the aperture 443 via the channel(s) 492, 493. When the plunger 460 is contacting the valve seat 440 (valve closed) the fluid pathway 50 is operatively disconnected to the aperture 443 (as is shown in Figure 4).

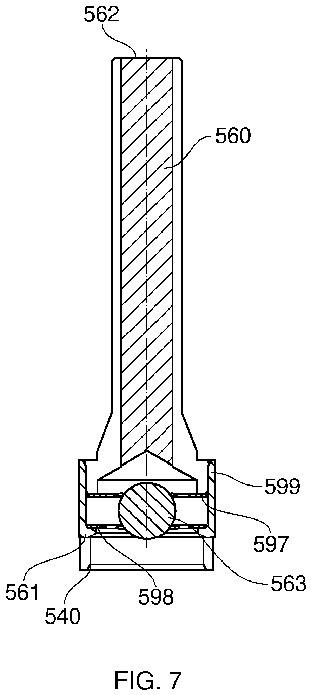

Figure 7 shows a fourth example of a plunger 560 and seat 540 of a valve assembly. The plunger 560 has a plunger first end 561 and a plunger second end 562. The plunger 560 may comprise any of the features of the first, second or third examples.

The plunger 560 has a sealing portion 563, which may be disposed at the plunger first end 561. The sealing portion 563 may be as described in, or comprise features of, the first, second or third examples. The sealing portion 563 may comprise or consist of one or more of: a ceramic; silicon carbide; boron carbide; cubic boron nitride; tungsten carbide; diamond; ruby; sapphire, a martensitic material. The sealing portion 563 may be configured to be at least partly received in the valve seat 540, and as such may be rounded, tapered, conical, and/or spherical.

The plunger 560 may comprise the damping system, which may comprise one or more spring elements. The one or more spring elements may be configured to dampen movement of the plunger 560, optionally movement of the sealing portion 563 of the plunger 560, relative to the valve seat 540. The one or more spring elements may be a spring, which may be a flat spring, disc spring, coil spring or take any other suitable shape. Where more than one spring element is provided, all spring elements may be of the same type, e.g. a flat spring. There may be provided a first and a second flat spring 597, 598, which may be as shown in figure 7.

The sealing portion 563 may be disposed on, or supported by, the or each spring element. The sealing portion 563 may be sprung by virtue of the spring element. The or each spring element may be configured to elastically deform when a load is applied to the sealing portion 563, which may be an axial load. Specifically, the spring element may be configured to elastically deform after the sealing portion 563 contacts the valve seat 540. In practice, as the plunger 560 and its sealing portion 563 moves towards the valve seat 540, the spring element is in a partially actuated state, i.e. there is a partial deformation of the spring element such that the spring element is trying to return to its unactuated position. Once the sealing portion 563 contacts the valve seat 540, continued movement of the plunger 560 towards the valve seat 540 may elastically deform the spring element. A damping effect may result from slippage of the spring element against the sealing portion 563, which may result from contact between the spring element and the sealing portion 563 as the spring element bends. As such, the or each spring element may act as a damping system, which may prevent shocks in the valve assembly and/or wear of components in the valve assembly. Equally, the spring element may accommodate any misalignment between the sealing element 563 and the valve seat 540.

The sealing portion 563 may be disposed between a plurality of spring elements, for example as shown in figure 7, in which the sealing portion 563 is disposed between a first and a second flat spring 597, 598. This arrangement has the advantage of ease of assembly, improved alignment of the sealing portion 563, and an improved damping effect due to a larger contact area between the flat springs 597, 598 and the sealing element 563.

An advantage of a combination of the damping system, specifically the one or more spring elements, and a hard sealing portion 563 and/or hard valve seat 540 is that a high precision valve assembly can be provided. This is particularly advantageous in miniature or low fluid volume applications, or applications in which a high degree of accuracy of the valve in use is required. A hard sealing portion and/or valve seat can be manufactured to a high degree of accuracy, and can have reliable and predictable properties over time by virtue of their material composition. When a hard material sealing portion 563 and/or valve seat 540 is used in combination with a damping system, which can accommodate shock and prevent wear, a particularly advantageous valve assembly is achieved.

The above description relates to preferred implementations of the invention, but it will be appreciated that other implementations and alternative combinations of the above features are possible. Variations and modifications will be apparent to the skilled person, such as equivalent and other features which are already known and which may be used instead of, or in addition to, features described herein.

For example, the plungers 60, 360, 460, 560 of all examples are interchangeable. The valve seats 40, 340, 440, 540 of all examples are interchangeable. The alignment tubes 30, 330, 430, of all examples are interchangeable. The fourth example may comprise an alignment tube of any of the first, second and third examples. The inlet components of all examples are interchangeable, and the outlet components of all examples are interchangeable.

## Claims

1. A valve assembly comprising:
a fluid inlet and a fluid outlet;
an alignment tube having a bore;
a valve seat disposed in the bore of the alignment tube;
a fluid pathway passing from the fluid inlet to the fluid outlet via the valve seat;
a moveable plunger having a first end and a second end, the plunger being disposed at least partially within the bore of the alignment tube, the plunger having a sealing portion at its first end, and being moveable between a first position and a second position to vary a flow restriction created by the valve seat and the sealing portion;
wherein the valve seat is supported by the bore of the alignment tube, and the plunger is supported by the bore of the alignment tube at a portion of the plunger distal from its first end; such that the alignment tube aligns the sealing portion of the plunger to the valve seat.

2. The valve assembly of claim 1, wherein the alignment tube has a guide portion for receiving and guiding the plunger, and a chamber portion for receiving the valve seat, wherein a majority of the plunger length in a longitudinal direction is preferably received in the guide portion.

3. The valve assembly of claim 2, wherein the guide portion has a bore diameter substantially the same as a diameter of at least part of the plunger received in the guide portion,
and/or wherein the plunger is supported by the bore of the alignment tube at least at its second end.

4. The valve assembly of claim 2 or claim 3, wherein the alignment tube is a thin-walled tube, having a guide portion wall thickness and/or a chamber portion wall thickness of less than a quarter of the bore of the alignment tube; preferably less than a third; preferably less than a tenth of the bore of the alignment tube.

5. A valve assembly according to any of the preceding claims, wherein the alignment tube has a microstructure indicative of having been deep-drawn.

6. A valve assembly according any of claims 2 to 5, wherein the chamber portion is tubular and is configured to receive the valve seat so as to allow assembly of the valve seat and the alignment tube by linear translation,
and/or wherein the guide portion is tubular and is configured to slidably engage at least part of the plunger;
wherein the guide portion and/or the chamber portion of the alignment tube are preferably substantially cylindrical.

7. A valve assembly according to any of claims 2 to 6, wherein the alignment tube comprises a bridging portion disposed between the guide portion and the chamber portion of the alignment tube,
wherein the guide portion has an inner lateral dimension which is preferably not equal to an inner lateral dimension of the chamber portion, and the bridging portion preferably provides a transition region between the guide portion and the chamber portion,
and/or wherein the guide portion has an outer lateral dimension which is not equal to an outer lateral dimension of the chamber portion.

8. A valve assembly according to claim 7, wherein:
the valve assembly comprises a biasing means located between the plunger and the bridging portion of the alignment tube, wherein the biasing means is preferably located in the chamber portion of the alignment tube; and/or
wherein a guide feature is provided on either or both of the plunger at the plunger first end, and the valve seat, the guide feature being configured to align the sealing portion of the plunger to the valve seat.

9. A valve assembly according to any of claims 2 to 8, wherein the inner lateral dimension of the chamber portion is larger than the inner lateral dimension of the guide portion of the alignment tube, and/or the outer lateral dimension of the chamber portion is larger than the outer lateral dimension of the guide portion of the alignment tube, wherein the chamber portion of the alignment tube has a first end configured to receive the valve seat and wherein the chamber portion preferably extends radially outwardly at its first end, so as to facilitate assembly of the valve seat into the alignment tube.

10. A valve assembly according to any of claims 2 to 9, wherein the plunger extends at least partially from the guide portion into the chamber portion of the alignment tube.

11. A valve assembly according to any of the preceding claims, wherein the alignment tube comprises a laterally disposed aperture, and the valve assembly is configured such that the fluid pathway passes through the laterally disposed aperture.

12. A valve assembly according to any of the preceding claims, comprising a damping system configured to dampen movement of the plunger as the plunger moves from the first position to the second position, the damping system comprising at least one spring element disposed at the first end of the plunger.

13. A valve assembly according to any of the preceding claims, comprising a connection means configured to clip onto a component of the valve assembly, the connection means comprising one or more electrically conductive components.

14. A method of assembling a valve assembly, comprising
providing an alignment tube having a bore; a valve seat; and a plunger having a first end and a second end, and having a sealing portion at its first end;
inserting the plunger at least partially within the bore of the alignment tube;
inserting the valve seat into the bore of the alignment tube;
such that the valve seat is supported by the bore of the alignment tube, and the plunger is supported by the bore of the alignment tube at a portion of the plunger distal from its first end, so that the alignment tube aligns the sealing portion of the plunger to the valve seat.

15. The method according to claim 14, configured for assembling the valve assembly of any of claims 1 to 13.
